# EUROPEAN PATENT SPECIFICATION

(11) **EP 4 543 744 B1**
(45) Date of publication and mention of the grant of the patent: **06.05.2026**
(21) Application number: 23731711.0
(22) Date of filing: 19.06.2023
(51) Int. Cl.: B63B 1/10, B63B 73/43, B63B 75/00

(54) **FLOATING FOUNDATION FOR AN OFFSHORE WIND TURBINE AND METHOD OF CONSTRUCTION**
SCHWIMMENDES FUNDAMENT FÜR EINE OFFSHORE-WINDKRAFTANLAGE UND HERSTELLUNGSVERFAHREN
FONDATION FLOTTANTE POUR UNE ÉOLIENNE OFFSHORE ET MÉTHODE DE CONSTRUCTION

(30) Priority: 24.06.2022 NL 2032274
(43) Date of publication of application: 30.04.2025
(73) Proprietor: Maridea B.V., 2611 HD Delft (NL)
(72) Inventor: LUSTHOF, Jeroen, 2544 NX The Hague (NL); SCHUILING, Christiaan, 3264 LH Nieuw-Beijerland (NL); GROOTE WOORTMANN, Paul, 2613 TC Delft (NL)
(74) Representative: Nederlandsch Octrooibureau
(86) International application number: PCT/EP2023/066418
(87) International publication number: WO 2023/247421

(56) References cited:
- US-A- 4 167 147
- US-A1- 2015 329 180
- US-A1- 2018 105 235
- US-B2- 9 810 204

## Description

### Field of the invention

The present invention relates to floating foundations, in particular for supporting offshore wind turbines and to methods of constructing and installing such foundations and turbines.

### Background art

Floating wind turbines are an excellent source of renewable energy as they can be situated offshore where the winds are stronger and more consistent. They show a great promise for wind farming as the floating wind turbines can be installed in deeper waters which significantly increases available sea area contrary to fixed wind turbines which are restricted to shallow waters close to the shore.

Floating wind turbines generally have a wind turbine comprising a tower, a nacelle and blades attached to a foundation that is afloat and anchored to the seabed by a catenary or a taut mooring system. Existing floating foundations can be spar-buoy type, wherein the foundation comprises a steel and/or concrete cylinder filled with a ballast of water and gravels to keep it floating up-right. However, these types of floating foundations are not globally suitable for large wind turbines as the draught of the foundation needed for keeping the foundation and the wind turbine afloat is directly related to the size and weight of the wind turbine. This results in extreme draughts for large turbines, making construction, transport and installation complicated.

Other systems use platform constructions, similar to oil and gas type floating platforms. US8471396B2 discloses one such floating wind turbine platform including a floatation frame that includes at least three columns that are coupled to each other with horizontal main beams. A wind turbine tower is mounted in the centre of the three columns or above a tower support column to simplify the system construction and improve the structural strength. Another such platform is shown in US 2015/329180.

EP2387528A2 discloses a tension-leg offshore submerged platform, in hybrid concrete-steel solution, having a pre-stressed concrete central body, a steel peripheral structure, which is connected to the central body through steel stiffeners, and further to a basement for such a platform.

However, floating foundations in deep waters are exposed to harsh environments of strong winds and large waves. In these environments high forces are induced on constituting elements of the floating foundation. The coupling and/or the connecting elements such as joints and/or struts are particularly vulnerable as the forces are highly concentrated in these regions. Hence, such floating foundations require regular inspections and maintenance. A floating foundation has been proposed in unpublished application WO2023/098994 that uses a continuous tubular structure of meandering shape. This had the particular advantage of a relatively simplified assembly process, since the continuous structure had no closed rings in its structure requiring precise positioning and could thus even be assembled afloat. That floating foundation avoided the use of joints and struts by the use of smooth curved transitions. Such curved sections are however more complex to engineer and construct and less adapted to high volume production processes.

It would be desirable to provide a floating foundation suitable for large wind turbines that would be resilient to the harsh conditions of the deep-water environment yet relatively cost-effective and simple to construct, transport and install.

### Summary of the invention

Therefore, according to a first aspect of the invention there is provided a floating foundation having a tower as defined in claim 1. The floating foundation comprises at least three vertical sections and at least two horizontal sections, wherein the vertical sections and the horizontal sections are tubular members, arranged in an alternating manner to define a meandering path extending from a proximal end to a distal end with the first vertical section located at the proximal end, the intermediate vertical section located in between a horizontal underwater section and a horizontal above-water section and the final vertical section located at the distal end of the floating foundation, the tubular members connected together by interpenetrating tube joints and wherein one of the vertical sections is arranged to receive the tower. The vertical sections comprise a first, a final, and an intermediate vertical section spaced from each other in a horizontal plane to ensure stability of the floating foundation. In the present context, the term interpenetrating tube joint is intended to denote a joint where a first tube passes through a front wall of a second tube and is provided with a connection to the rear wall thereof. The skilled structural engineer will understand that this provides a significantly stronger joint than one that is merely connected at the line of intersection on the front wall. The term is intended to encompass joints where the first tube terminates within the second tube and fully interpenetrating tube joints where the first tube extends beyond the second tube. The term also includes joints between tubes of equal thickness and those where the first tube is of smaller diameter than the second tube. In an embodiment, no more than two tubular members intersect at the interpenetrating tube joints.

The horizontal sections may include at least one underwater section configured to stay underwater when the floating foundation is in use and at least one above-water section configured to stay above water when the floating foundation is in use. The vertical sections are intended to pass through the waterline and thus will each have an underwater portion and an above-water portion. Connections between the vertical and the horizontal sections are realized using the interpenetrating tube joints. These joints are advantageous as they can achieve adequate strength without the use of external braces or struts. Curved portions are difficult to manufacture as such portions require use of double curved plates or a number of smaller elements that are assembled together to form different sections..

To aid further description, the following directions are used throughout this application. A direction parallel to the tower of the wind turbine is a vertical direction. A plane perpendicular to the vertical direction is a horizontal plane. When the floating foundation is afloat, the horizontal plane is defined by a water surface. The above-water sections remain clear of the water surface in use and the underwater sections remain submerged during use. Only the vertical sections which, when the floating foundation is afloat, pass through the water surface and link the underwater sections to the above-water sections. It will be understood that the precise depth at which the foundation floats will depend on the weight of the turbine and the presence of ballast within the foundation and that parts of the underwater sections may extend above the waterline under certain conditions and vice-versa.

It should be noted that the floating foundation according to the present invention may be substantially hollow. However, this does not imply that the floating foundation cannot comprise a plurality of inner chambers or compartments. In fact, in many instances it is necessary to partition an inner space of the floating foundation for the proper functioning of the floating foundation, as it will be apparent from this disclosure.

As mentioned above, the floating foundation according to the invention is arranged to define a meandering path extending from a proximal end to a distal end. The proximal end may be arranged to stay above-water when the floating foundation is in use while the distal end may be arranged to stay underwater when the floating foundation is in use. The first vertical section is located at the proximal end of the floating foundation. The intermediate vertical section is located in between a horizontal underwater section and a horizontal above-water section. The final vertical section is located at the distal end of the floating foundation. In this context, the word "meandering" is to be understood in the broadest sense, to mean "changing direction, not extending linearly". Thus, meandering may be interpreted as winding, zigzagging, curving, twisting, turning, to mention a few.

The three vertical sections are spaced from each other to form a stable base. The base is stable if a system comprising the floating foundation and the wind turbine when displaced from its equilibrium position under the influence of external forces, such as waves and/or the wind, manages to return back to the equilibrium position. In other words, the system has to be sufficiently hydro-mechanically stable to counteract the heeling moments of strong winds, currents and waves. In general, this will require the vertical sections to be sufficiently spaced from each other that the centre of floatation is distanced from each of them. It will also require that the above-water section is sufficient in size to not be immersed by the greatest possible force or moment acting on the wind turbine. In embodiments, the vertical sections may be spaced from each other by at least 40 m or at least 60 m or even more than 100 m, measured centre to centre. Preferably, a distance between the vertical sections is around 85 m.

Any of the vertical sections may be arranged to receive the tower. The tower may be connected to the floating foundation by connection means such as one or more of the following: welding, using bolts, flanges, couplers, sleeves, slip-joint connections, and/or similar. In an embodiment, a portion of the tower and a portion of the respective vertical section may overlap. For the avoidance of doubt, the tower in this context is considered to start above the waterline with the vertical section of the floating foundation passing through the waterline. Nevertheless, it is not intended to exclude towers that pass through the waterline and connect to the floating foundation underwater. In such cases, the base of the tower may form the vertical section. Preferably, the tower is connected to the intermediate vertical section which results in a hydro-dynamically stable structure. Nonetheless, the tower may be connected to the first or final vertical section as well, which is advantageous as the installation process may be carried out in a smoother manner as will be discussed below. The hydro-dynamics of such a structure may be further improved by use of heave plates and/or ballast tanks.

According to a further embodiment, distances between successive vertical sections in the horizontal plane are equal. The transition regions are spaced equally apart. Preferably, the vertical sections form nodes of an equilateral triangle in the horizontal plane. This symmetric configuration provides optimized stability to the base of the floating foundation. This is particularly suited for a foundation that is directionally tethered in position. It will be understood that other configurations and different numbers of vertical sections are also possible, with three being the minimum for stability. In particular, a foundation that is tethered to rotate with the wind direction, might benefit from a different distribution of vertical sections.

The sections of the floating foundation are preferably linear. The linear shape of the sections is advantageous since it is the easiest to produce and to assemble. The length of the horizontal sections may be chosen to provide adequate spacing of the vertical sections and thus the required stability to the floating foundation when the wind turbine is attached to it. This length will depend on the parameters of the wind turbine as well as on the parameters of the floating foundation, The length of the vertical sections will depend on further factors of the design, in particular the expected wave height to ensure that the above-water sections remain above-water.

Additionally, the use of straight underwater section can be advantageous in limiting the draught of the floating foundation. In preferred embodiments, the draught of the loaded foundation may be less than 30 m, or even less than 20 m, and preferably around 24 m. It may be subsequently ballasted to a deeper operational position. In the unloaded situation, prior to installation of the tower, draught may be less than 10 m or less than 8 m and as little as 6 m for a foundation of sufficient capacity for a wind turbine of more than 10 MW. Such shallow draught allows easy relocation and/or movements in inshore waters. The straight portion or portions may also provide a stable base when the foundation is onshore or grounded in shallow water.

As noted above, the floating foundation comprises interpenetrating tube joints. The interpenetrating tube joints are arranged to interconnect the vertical sections with the horizontal sections. The interpenetrating tube joint, or more precisely a connection between the sections forming the interpenetrating tube joint, may be fixed by one or more of the following: welding, using bolts, flanges, couplers, sleeves, and/or similar. Welding is the most preferred option. Preferably, for each interpenetrating tube joint an end of the horizontal section passes completely through the vertical section and is welded both at an entry side and at an exit side.

In an embodiment, the horizontal sections are all of the same constant first diameter and the vertical sections are all of the same constant second diameter. The first diameter may be larger than the second diameter or both diameters may be the same. In a preferred embodiment, the first diameter of the horizontal sections is smaller than the second diameter of the vertical sections. This allows the horizontal sections to pass through the vertical sections, leaving at least a part of the wall of the vertical section intact. In an embodiment, the central axes of the horizontal and vertical sections may coincide.

Preferably, the sections of the floating foundation have circular cross-sections. However, it should be noted that the sections may be also triangular, rectangular, octagonal, or any other suitable cross-section. In the case of circular cross-section, a diameter of each section of the floating foundation may be in a range between 7.5 m and 15 m, and more preferably between 9 m and 12 m. The second diameter may be in a range between 10 m and 15 m, preferably around 12 m, while the second diameter may be in a range between 7.5 m and 12 m, preferably around 9 m.

The floating foundation may be manufactured from a plurality of short, tubular elements. The tubular elements are interconnected and configured to form different sections of the floating foundation such as the horizontal and vertical sections. The tubular elements can be interconnected using connection means such as one or more of the following: welding, using bolts, flanges, couplers, sleeves, and/or similar. Welding is the most preferred option. The tubular elements may have the shape of a hollow cylinder or tube section. Walls of the tubular elements have to be sufficiently thick to sustain forces induced by waves and wind as well as to support the weight of the wind turbine when the tubular elements are interconnected to form the floating foundation. Using tubular elements to form the floating foundation is advantageous as these elements are of smaller size compared to the different sections of the floating foundation and are consequently easier to produce in series. Elements exposed to greater stress may be provided with thicker walls or the whole of the floating foundation can be manufactured with a constant wall thickness. In preferred embodiments the walls of the floating foundation have a thickness of between 10 mm and 100 mm, preferably between 20 mm and 70 mm.

In one embodiment, the wall thickness of different sections of the floating foundation is constant. However, different sections of the floating foundation may have different thicknesses with respect to each other. The wall thickness of the above-water section may be less than the wall thickness of the underwater section. For example, the wall thickness of the above-water section may be 75% of the wall thickness of the underwater section or less. In this manner, the overall weight and material cost of the floating foundation may be optimised. Furthermore, the thickness of the wall around the interpenetrating tube joints, and more particularly around the fixed connection of the interpenetrating tube joints, may be in a range between 110% and 140%, preferably around 120%, of the wall thickness of the underwater section and/or the above-water section .

According to an embodiment, each of the tubular elements comprises an inner surface and at least one ring frame may be attached to the inner surface. The ring frame is connected to the inner surface by welding or similar. The ring frame is preferably in the form of a flat flange configured to about the inner surface and reinforce the tubular elements against buckling or collapse. However other forms such as T-, angle bars, and similar are foreseeable as well. This allows for a reduction of the thickness of the tubular elements which results in a lighter floating foundation with improved buoyant properties. Surprisingly it has been found that by the use of such ring frames at every 2 m to 10 m and preferably every 3 m of the length of the section, the overall wall thickness required could be reduced by a factor of 3 and the weight of the floating foundation accordingly. Some of the ring frames may completely occlude the interior of the floating foundation as sealed or open bulkheads. The thickness of the ring frames may correspond to 25% to 100% of the thickness of the wall and is preferably in the range of 10 mm and 50 mm. The radial extent of the ring frame may be between 5% and 30% of the diameter of the tubular element or between 5 cm and 100 cm and preferably between 20 cm and 50 cm.

The tubular elements can be manufactured and assembled using conventional monopile construction technology and may be manufactured off-site in a dedicated manufacturing facility. The use of ring frames may also ensure that the tubular element maintains its shape during the production and assembly process. In this sense, it also permits thinner materials to be used, since otherwise thicker plate would be required to maintain adequate accuracy during manufacture.

The tubular elements may be joined together e.g. by welding or the like to form respective underwater sections, above-water sections, vertical sections, and/or interpenetrating tube joint sections. Preferably, the different sections of the floating foundation are produced and partially assembled at one location such as a factory or a yard close to a harbour or quay and then moved to another location such as at a harbour or a quay or to an inshore or offshore location for final assembly to form the floating foundation.

The installation of the wind turbine can be performed inshore or even offshore. Inshore installation is preferred as it significantly reduces costs and installation time. Furthermore, installation inshore, in shallow water, allows for an easy inspection and commissioning of the system. This is unlike the fixed foundations or spars that need to be installed offshore, i.e. in deep water at the project location. Alternatively, the wind turbine can be installed offshore wherein the wind turbine may be connected to the floating foundation using a heavy lift construction vessel.

The interior of the floating foundation is substantially hollow and may also be in open communication with the interior of the tower. The interior may be divided by the walls of the respective sections. However, for various reasons it may however be desirable to additionally divide each section into a number of separate inner chambers that are hermetically closed with respect to each other. To accomplish this, some ring frames may extend completely across the inner diameter to form bulkheads which are used to define separate inner chambers.

According to an embodiment, at least one inner chamber is configured to receive an amount of water to operate as a ballast tank, allowing the foundation to be ballasted with water during commissioning to achieve an optimal draught for stable operation. The floating foundation may be ballasted with seawater equivalent to more than the combined weight of the foundation and turbine. This will more than double the draught. It will be understood that the ballast should be distributed between the inner chambers and/or different sections of the floating foundation to maintain the stability of the floating foundation in use.

The ballast system can be passive, by which it is meant that the ballast water amount and location remain identical during operational life of the unit. The inflow of water into the different sections and chambers of the foundation may be controlled by sea valves.

Alternatively, the inner chambers may be provided in combination with an active ballast system that can be used to compensate for the static inclination caused by turbine thrust, and may comprise pumps, valves and control equipment. In this manner, it is possible to adjust the buoyancy of the floating foundation e.g. in response to wind load. This is particularly relevant for smaller systems, where wave height and maximum load conditions might otherwise surpass the limits of a 'stationary' ballast.

The ballast system may either be based on moving ballast between the inner chambers in a closed system, which is a preferred solution, or by means of in- and outflow to the sea.

According to an embodiment, the floating foundation may have at least four inner chambers or ballast tanks. The number and the configuration of the inner chambers need not depend on the type of the ballast system. Preferably, the floating foundation comprises at least seven inner chambers, wherein the underwater section comprises at least four inner chambers. The inner chambers belonging to different sections are closed by water-tight bulkheads. However, the inner chambers belonging to the same section may be interconnected by e.g. valves, pipes, and/or similar flow control means.

According to an embodiment, the final vertical section is arranged to terminate underwater and is preferably provided with a heave plate. The final vertical section may be arranged at the distal end of the floating foundation. The heave plate may be in the form of a massive disk or body of steel or other suitably material. The weight of the heave plate is arranged to control a centre of gravity of the floating foundation and improve its stability while limiting the overall draught, especially during assembly.

The floating foundation may be made to a great extent of steel. However, other materials may be present too, such as one or more of the following: iron, concrete, fibreglass, resin, plastic, copper, aluminium and similar.

The floating foundation is preferably configured to support wind turbines with power outputs in the range of 2 MW to above 15 MW and weight of more than 1000 t or even more than 9000 t including the tower, nacelle and blades. The length of the horizontal sections in the horizontal plane may be in the range of between 60 m and 120 m, preferably around 100 m. The length of the vertical sections may be in a range between 30 m and 70 m, preferably between 35 m and 60 m, and most preferably around 40 m. The weight of the floating foundation when the ballast tank is empty may be in range between 2500 t and 9000 t.

According to an embodiment, the floating foundation is fixed to the seabed by a catenary or a taught or semi-taught system. The precise form of the mooring system will depend on various factors including the depth and nature of the sea bed. A semi-taught mooring system may be preferred for water depths of less than 200 m. A catenary system may be preferred for water depths above 200 m.

In an embodiment, the floating foundation consists of three vertical members and two horizontal members. It will be understood that this does not exclude the presence of the mentioned heave plate or further non-structural elements such as ladders, gantries, platforms and the like.

The invention further contemplates a floating foundation wherein the interconnected sections define a branchless, meandering body. The body may be without forks or bifurcations above the water line or may be completely devoid of forks or bifurcations, having only a proximal end and a distal end. In an embodiment, the distal end is an underwater section.

The invention further relates to a floating wind turbine having a tower and a floating foundation as described above or hereinafter. The tower may be connected to a first vertical section of the floating foundation or preferably, to an intermediate vertical section. In particular, the tower may be aligned with the floating foundation, which should thus preferably be vertically oriented at this location. A cross-section of the tower may correspond to that of the floating foundation at a location of the connection such that the tower may be considered an extension of the elongate floating foundation.

The tower may be connected to the floating foundation by any suitable means as detailed above, including a flanged connection or a welded connection. A welded connection using a field joint technique may be preferred as this requires less accurate manufacture of the surfaces to be joined. Another alternative is a sleeve joint.

According to another aspect of the invention, there is provided a method for constructing a floating foundation for a wind turbine. The method comprises steps of:
a. providing first and second annular feet each having an upper side with a recess of a first diameter, the first and second feet having a second diameter;
b. providing a first horizontal section having a first end and an intermediate end, the first horizontal section being tubular and having a diameter corresponding to the first diameter,
c. placing the first horizontal section onto the first and second annular feet such that it is aligned with the respective recesses with the first and intermediate ends extending beyond the respective feet,
d. providing first and intermediate vertical sections, being tubular and having the second diameter and being provided with recesses of the first diameter at their respective lower sides,
e. placing the first and intermediate vertical sections onto the first horizontal section, aligned respectively with the first and intermediate annular feet and welding all elements together to form first and lower intermediate, interpenetrating tube joints,
f. providing further interpenetrating tube joints to at least a second horizontal section and a final vertical section to define a meandering path extending from a proximal end to a distal end with the first vertical section located at the proximal end, the intermediate vertical section located in between a horizontal underwater section and a horizontal above-water section and the final vertical section located at the distal end of the floating foundation.

It will be understood that other sequences of assembly steps may be contemplated, in particular, the interpenetrating tube joints may be constructed first and subsequently connected to the remainder of the respective horizontal and vertical sections. Alternatively, the horizontal sections may be inserted through openings provided in the vertical sections.

In an embodiment, at least the method steps a. to c. take place on shore and at least the method step f. takes place with the first horizontal section floating.

The tubular elements may comprise ring frames. The ring frames may be connected by welding. Additionally, the sections of the floating foundation may also be assembled by welding.

The construction may be performed of a single unit at a time or multiple units can be produced in series in the form of a production line.

In a further embodiment, tubular elements are interconnected onshore at a first location to form the sections of the floating foundation. The horizontal sections and the vertical sections are then assembled together at a second location such as at a quayside, pier, or an offshore location. In this context, quayside is understood to be a location whence the different sections of the floating foundation can be lifted into the water using one or more lifting means such as heavy lift cranes, floating crane vessels, jacking systems, and/or launching barges.

A distinction is thus made between the connection together of the tubular elements, which at least partially takes place in a production environment, and the assembly of the sections which takes place in the sheltered assembly location such as a harbor, bay or fjord. Advantageously, these sections can be transported to the quayside where they can be assembled afloat at a shallow water location or even aground. The quayside may be arranged to have a storing area and an assembly area. The storing area may be used for stacking a plurality of different sections of the floating foundation. The sections can be moved from the storing area by self-propelled modular transporters (onshore) or barges (afloat) to the assembly area, which is in close proximity of the storing area. The assembly area may comprise the lifting means to unload and/or lift sections of the floating foundation into the water. The sections may be partially assembled onshore and partially while afloat. Particularly, the underwater horizontal section may be connected to two vertical sections onshore and launched to a floating position, and the above-water horizontal section may be assembled to join the underwater sections together afloat.

To keep the sections afloat during the assembly, lifting bags may be attached to the sides of the sections and/or the inner chambers may be ballasted with water.

Unlike a dry-dock assembly, assembly afloat does not require large assembly areas as the sections may be easily moved/rotated by winches, barges, carriers, ships, or similar during the assembly process. After the assembly, the floating foundation can be towed away by towing means such as a ship or a barge to clear the assembly area for the next assembly. This reduces the assembly time significantly, allows for flexibility during the series production, and allows for mass assembly of the floating foundation at a relatively small assembly area.

In one embodiment, the method comprises a step of preparing the intermediate vertical section for receipt of a wind turbine tower and optionally, connecting a wind turbine tower to the intermediate vertical section. This step may also take place at or adjacent to the second location. Preferably, a tower of the wind turbine is installed above the water surface. If this takes place inshore, the completed wind turbine may then be towed to an offshore location and the foundation ballasted and anchored. In an alternative, the floating foundation can be towed to an offshore location and the tower and wind turbine installed offshore. The shallow draught of the unballasted floating foundation makes for ease of navigation in inshore waters. Electrical cables of the wind turbine preferably pass through the tower and leave the interior at around the height of the boarding deck level of the above-water section. The cable may leave the foundation via a J-tube. This structure allows for easy installation of the export cable and avoids hull penetrations that are permanently submerged.

In an embodiment, the method further comprises a step of providing a heave plate to a lower end of the final vertical section. The heave plate improves the motional behaviour of the foundation by decoupling heave and pitch motion of the foundation when afloat. Furthermore, the heave plate limits the draught of the foundation by compensating the submerged volume of the underwater section allowing to assemble the foundation and install the wind turbine at shallow draughts.

Further advantages of the disclosed invention will become evident in the following.

### Brief description of the drawings

The present invention will be discussed in more detail below, with reference to the attached drawings, in which:
Fig. 1 depicts a floating wind turbine installation in perspective view;
Fig. 2 depicts the installation of Fig. 1 in side elevation;
Fig. 3 depicts the installation of Fig. 2 in plan view;
Fig. 4 depicts in an exploded view, sections of the floating foundation of Figs 1 to 3;
Fig. 5 depicts an enlarged portion of an interpenetrating tube joint marked V in Fig. 2; and
Fig. 6 depicts an assembly process of the floating foundation.

### Description of embodiments

The invention will be explained in more detail below with reference to drawings in which illustrative embodiments thereof are shown. The drawings are intended exclusively for illustrative purposes and not as a restriction of the inventive concept which is to cover all modifications, equivalents, and alternatives falling within the scope of the present invention. The scope of the invention is only limited by the definitions presented in the appended claims.

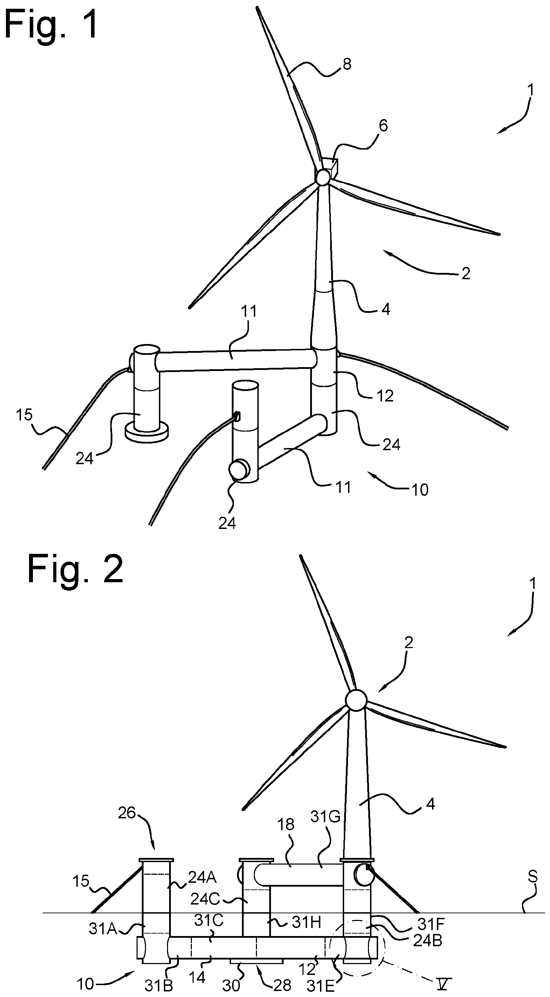

Figure 1 illustrates in perspective view a first embodiment of a floating wind turbine installation 1 according to the present invention. The installation 1 comprises a wind turbine 2 having a tower 4, a nacelle 6 and blades 8. The wind turbine is mounted on a floating foundation 10 comprising an elongate hollow body 12 having three vertical sections 24 and two horizontal sections 11. The floating foundation 10 is unmanned although access for service personnel may be provided. The elongate hollow body 12 has a proximal end 26 which in use is above the water surface S and a distal end 28 provided with a heave plate 30. The installation 1 is kept in place by mooring lines 15. The illustrated wind turbine 2 has a rated capacity of 15 MW and a weight of 2400 t. The height of the nacelle 6 above the waterline is around 150 m and the blade length is around 110 m. The following description of the floating foundation 10 is based on a turbine of this scale. The skilled person will nevertheless, understand that dimensions of the floating foundation 10 will vary according to the size of the turbine.

Figure 2 shows the installation 1 of Fig. 1 in side elevation in the installed condition, floating on a body of water having a surface S. The horizontal sections include an underwater section 14 and an above-water section 18. The horizontal sections 11 are tubularly shaped with closed ends. The vertical sections 24 A,B,C pass through the splash zone at the water surface S. Figure 2 further shows compartmentation of the interior of the elongate hollow body 12 into eight inner chambers 31 A,B,C,D,E,F,G,H. The inner chambers 31 B,C,D,E,H are ballasted with sea water. The inner chambers are separated by water-tight bulkheads.

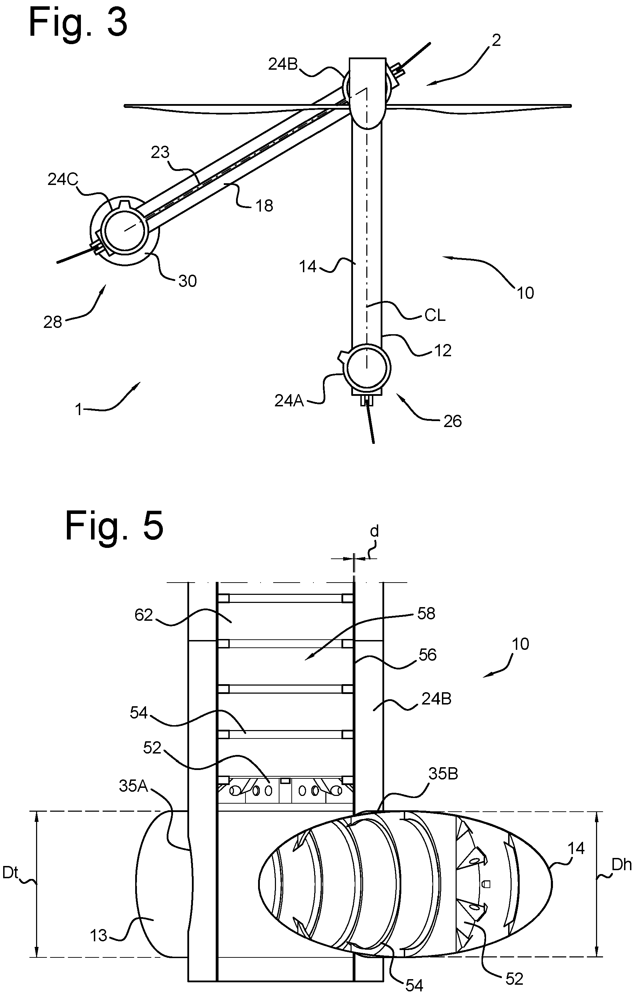

Figure 3 shows the installation 1 of Fig. 2 in plan view, illustrating the positions of the vertical sections 24 A,B,C in the horizontal plain. A first vertical section 24 A is located at the proximal end 26, a final vertical section 24 C is located at the distal end 28 and the wind turbine 2 is connected to an intermediate vertical section 24 B, located in between the above-water section 18 and the underwater section 14. As can be seen, in the illustrated embodiment, these vertical sections are located at the corners of an equilateral triangle. The underwater section 14 and the above-water section 18 form two sides of the triangle. In this case, the length of the respective sides is 85 m calculated at a centreline CL of the elongate hollow body 12. A deck 23 extends along the above-water section 18 and circumferentially around the vertical sections 24 A,B,C at the same level with the above-water section 18. An interior of the above-water section 18 can be accessed from the deck 23 via manholes (not shown) to perform inspections and maintenance of the floating foundation 10. The inspection and the maintenance of the tower 4 may be carried out via a watertight door (not shown) located on the intermediate vertical section 24 B.

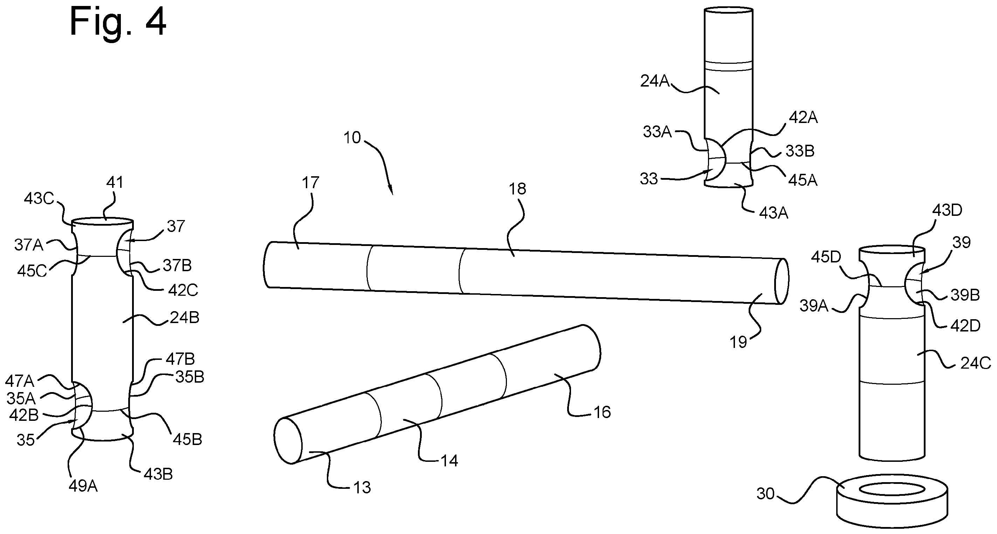

Figure 4 shows in an exploded view the sections of the floating foundation 10 of Figs 1 to 3. The elongate hollow body 12 can be considered as five sections. The underwater section 14 has a first end portion 16 and a second end portion 13. A diameter of the first end portion 16 of the underwater section 14 is smaller than a diameter of the first vertical section 24 A and configured to pass through a first pair of holes 33 A,B on a surface of the first vertical section 24 A defining a first through-hole 33. Similarly, the intermediate vertical section 24 B has a second pair of holes 35 A,B defining a second through-hole 35 configured to receive the second end portion 13 of the underwater section 14. The intermediate vertical section 24 B has a third pair of holes 37 A,B defining a third through-hole 37 configured to receive a first end portion 17 of the above-water section 18 and the final vertical section 24 C has a fourth pair of holes 39 A,B defining a fourth through-hole 39 for receiving a second end portion 19 of the above-water section 18. The intermediate vertical section 24 B has an opening 41 for receiving the tower 4 of the wind turbine 2. Each hole is formed by connecting a recessed annular foot 43 A,B,C,D to a recessed end portion 42 A,B,C,D of the vertical section 24 A,B,C using a weld line 45 A,B,C,D. Recessed areas of the recessed end portions 42 A,B,C,D and the recessed annular feet 43 A,B,C,D each define a half circle arranged to form the first 33, the second 35, the third 37, and the fourth 39 through-hole upon connecting the elements by the weld line 45 A,B,C,D.

Figure 5 illustrates a detail of the interpenetrating tube joint marked V in Fig. 2, showing an inner space 58 of the floating foundation 10. The intermediate vertical section 24 B and the underwater section 14, as well as other sections of the floating foundation, are formed from a steel wall 56 having a thickness d and defining the inner space 58. On an inner surface 62 of the wall 56 ring frames 54 are welded to reinforce the section. The sections further include bulkheads 52 which divide the inner space 58 of the floating foundation 10 into different compartments. The second end portion 13 of the underwater section 14 extends through the second through-hole 35 and beyond the intermediate section 24 B to form the interpenetrating tube joint. A diameter of the second end portion Dt and a diameter of the second through-hole Dh are designed to form a tight-fit and the interpenetrating tube joint is fixed by welding the two sections together around the second pair of holes 35 A,B.

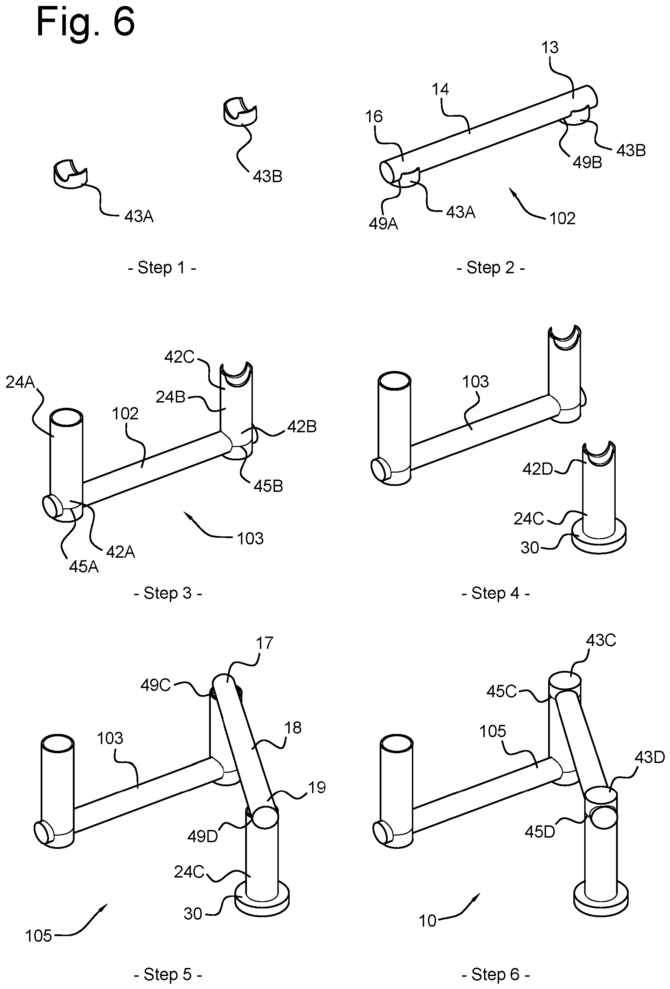

Figure 6 illustrates assembly steps of the floating foundation 10. In Step 1, a first recessed annular foot 43 A and a second recessed annular foot 43 B are placed at a distance from each other. In Step 2, the underwater section 14 is positioned on top of them such that the first end portion 16 and the second end portion 13 of the underwater section 14 are placed over recessed areas of the foot 43 A and the foot 43 B, respectively, and connected by a first weld line 49A and a second weld line 49B to form a first structure 102. In Step 3, the first vertical section 24 A and the second vertical section 24 B are placed over the first structure 102. The first vertical section 24 A has a first recessed end portion 42 A which is placed over the first annular foot 43 A and the first end portion 16 of the underwater section 14 to completely enclose the first end portion 16 of the underwater section 14. The same process is repeated with the intermediate vertical section 24 B at the second end portion 13 of the underwater section 14. The first 24 A and the second 24 B vertical sections are connected to the first structure 102 by a third 45 A and a forth 45 B weld line to form a second structure 103. The first three process steps are performed at an onshore location and then the second structure 103 is launched to a floating position together with a final vertical section 24 C which is placed apart from it. The final vertical section 24 C has a heave plate 30 connected to it to ballast the floating foundation upon assembly and in use. The respective second structure 103 and the final vertical section 24 C can be stably floated at the correct height by suitable ballasting and the use of lifting bags. In step 5, the above-water section 18 is positioned over the intermediate vertical section 24 B and the final vertical section 24 C. The intermediate vertical section 24 B and the final vertical section 24 C have a third recessed end portion 42 C and a fourth recessed end portion 42 D, and first and second end portions 17, 19 of the above-water section 18 are placed thereover. The above-water section 18 is connected to the rest of the structure by a fifth and a sixth weld line 49 C, D to form a third structure 105. Finally, in Step 6, third and fourth recessed caps 43 C, D are placed over the end portions 17,19 of the above water section 18 which is thus enclosed by the third and fourth recessed end portions 42 C, D. The elements are connected by seventh and eighth weld line 45 C, D to form the floating foundation 10.

Due to its simple concept, the floating foundation according to the invention is fully scalable and suitable for wind turbines of different sizes. The floating foundation can be provided with an active ballast system or a passive ballast system depending on the needs of the user and the conditions of the environment at the project location. Exemplary characteristics of different embodiments of the floating foundation according to the invention are shown in Table 1.

**Table 1.**

| Turbine | Waves (Hs) | Outfitting | Centre spacing, typical diameter | Foundation weight |
|---|---|---|---|---|
| 9.5 MW | 6.5 m | Active | 65 m, 9.3 m | 2500 t |
| 9.5 MW | 6.5 m | Passive | 84 m, 12 m | 3900 t |
| 9.5 MW | 11 m | Active | 65 m, 9.3 m | in development |
| 9.5 MW | 11 m | Passive | 84 m, 12 m | 4900 t |
| 15 MW | 6.5 m | Active | 84 m, 12 m | 4700 t |
| 15 MW | 6.5 m | Passive | 105 m, 15 m | 7600 t |
| 15 MW | 11 m | Active | 84 m, 12 m | 5200 t |
| 15 MW | 11 m | Passive | 105 m, 15 m | 9000 t |

The floating foundation according to the invention can be efficiently produced in series since many elements are identical. Further, the sections can be easily stored and moved for a final assembly. The final assembly can be performed inshore and/or afloat with a minimal number of welds or other types of connection. The minimal draught for the floating foundation may be just 8 m, while the operational draught of the floating foundation may be around 24 m.

The present invention may be embodied in other specific forms without departing from its essential characteristics. The described embodiments are to be considered in all respects only as illustrative and not restrictive to the inventive concept. The scope of the invention is, therefore, indicated by the appended claims rather than by the foregoing description. It will be apparent to the person skilled in the art that alternative and equivalent embodiments of the invention can be conceived and reduced to practice. In addition, many modifications may be made to adapt a particular configuration or material to the teachings of the invention without departing from the essential scope thereof.

All modifications which come within the meaning and range of equivalency of the claims are to be embraced within their scope.

## Claims

1. A floating foundation (1) for an offshore wind turbine (2) having a tower (4) defining a vertical direction, the floating foundation comprising at least a first vertical section (24A), a final vertical section (24C), and an intermediate vertical section (24B) and at least two horizontal sections (11), wherein
the vertical sections and the horizontal sections are tubular members, arranged in an alternating manner to define a meandering path extending from a proximal end (26) to a distal end (28) with the first vertical section located at the proximal end, the intermediate vertical section located in between a horizontal underwater section (14) and a horizontal above-water section (18) and the final vertical section located at the distal end of the floating foundation, the tubular members being connected together by interpenetrating tube joints and wherein one of the vertical sections is arranged to receive the tower.

2. The floating foundation according to claim 1, wherein the intermediate vertical section is arranged to receive the tower.

3. The floating foundation according to any one of the preceding claims, wherein the horizontal sections are of a constant first diameter and the vertical sections are all of a constant second diameter and the first diameter of the horizontal sections is preferably smaller than the second diameter of the vertical sections.

4. The floating foundation according to any one of the preceding claims, wherein the vertical sections are equally spaced and optionally, wherein the vertical sections form nodes of an equilateral triangle in a horizontal plane.

5. The floating foundation according to any one of the preceding claims, wherein for each interpenetrating tube joint an end of the horizontal section passes completely through the vertical section and is welded both at an entry side and at an exit side.

6. The floating foundation according to any one of the preceding claims, consisting of three vertical members and two horizontal members.

7. The floating foundation according to any one of the preceding claims, wherein each section of the floating foundation further comprises a plurality of ring frames (54) attached to an inner surface and extending radially inwardly.

8. The floating foundation according to any one of the preceding claims, wherein each section of the floating foundation has a circular external cross-section with a diameter in a range between 7.5 m and 15 m, and more preferably between 9 m and 12 m.

9. The floating foundation according to any one of the preceding claims, wherein the final vertical section is arranged to terminate underwater and is preferably provided with a heave plate (30).

10. The floating foundation according to any one of the preceding claims, wherein an interior of the floating foundation is substantially hollow and comprises a plurality of separated ballast tanks (31B,C,D,E,H).

11. The floating foundation according to any one of the preceding claims, wherein the floating foundation is made of steel and configured to support a wind turbine with a total weight of more than 1000 t.

12. A floating wind turbine having a tower and a floating foundation according to any one of the preceding claims.

13. A method for constructing a floating foundation for an offshore wind turbine, wherein the method comprises steps of:
a. providing first and intermediate annular feet each having an upper side with a recess of a first diameter, the first and second feet having a second diameter;
b. providing a first horizontal section having a first end and an intermediate end, the first horizontal section being tubular and having a diameter corresponding to the first diameter,
c. placing the first horizontal section onto the first and second annular feet such that it is aligned with the respective recesses with the first and intermediate ends extending beyond the respective feet,
d. providing first and intermediate vertical sections, being tubular and having the second diameter and being provided with recesses of the first diameter at their respective lower sides,
e. placing the first and intermediate vertical sections onto the first horizontal section, aligned respectively with the first and intermediate annular feet and welding all elements together to form first and lower intermediate, interpenetrating tube joints,
f. providing further interpenetrating tube joints to at least a second horizontal section and a final vertical section to define a meandering path extending from a proximal end to a distal end with the first vertical section located at the proximal end, the intermediate vertical section located in between a horizontal underwater section and a horizontal above-water section and the final vertical section located at the distal end of the floating foundation.

14. The method according to claim 13, wherein at least steps a. to c. take place on shore and at least step f. takes place with the first horizontal section floating.

15. The method according to claim 13 or claim 14, further comprising providing a heave plate to a lower end of the final vertical section and/or preparing the intermediate vertical section for receipt of a wind turbine tower and optionally connecting a wind turbine tower to the intermediate vertical section.

## Patentansprüche

1. Ein schwimmendes Fundament (1) für eine Offshore-Windkraftanlage (2) mit einem Turm (4), der eine vertikale Richtung definiert, wobei das schwimmende Fundament mindestens einen ersten vertikalen Abschnitt (24A), einen letzten vertikalen Abschnitt (24C), und einen mittleren vertikalen Abschnitt (24B) sowie mindestens zwei horizontale Abschnitte (11) umfasst, wobei
die vertikalen Abschnitte und die horizontalen Abschnitte rohrförmige Elemente sind, die abwechselnd angeordnet sind, um einen mäanderförmigen Weg zu definieren, der sich von einem proximalen Ende (26) zu einem distalen Ende (28) erstreckt, wobei sich der erste vertikale Abschnitt am proximalen Ende befindet, der mittlere vertikale Abschnitt zwischen einem horizontalen Unterwasserabschnitt (14) und einem horizontalen Überwasserabschnitt (18) angeordnet ist und der letzte vertikale Abschnitt am distalen Ende des schwimmenden Fundaments angeordnet ist, wobei die rohrförmigen Elemente durch ineinandergreifende Rohrverbindungen miteinander verbunden sind und wobei einer der vertikalen Abschnitte so angeordnet ist, dass er den Turm aufnimmt.

2. Schwimmendes Fundament nach Anspruch 1, wobei der mittlere vertikale Abschnitt zur Aufnahme des Turms angeordnet ist.

3. Schwimmendes Fundament nach einem der vorstehenden Ansprüche, wobei die horizontalen Abschnitte einen konstanten ersten Durchmesser und die vertikalen Abschnitte alle einen konstanten zweiten Durchmesser aufweisen und der erste Durchmesser der horizontalen Abschnitte vorzugsweise kleiner ist als der zweite Durchmesser der vertikalen Abschnitte.

4. Schwimmendes Fundament nach einem der vorstehenden Ansprüche, wobei die vertikalen Abschnitte gleichmäßig beabstandet sind und wobei die vertikalen Abschnitte optional Knotenpunkte eines gleichseitigen Dreiecks in einer horizontalen Ebene bilden.

5. Schwimmendes Fundament nach einem der vorstehenden Ansprüche, wobei bei jeder sich gegenseitig durchdringenden Rohrverbindung ein Ende des horizontalen Abschnitts vollständig durch den vertikalen Abschnitt verläuft und sowohl an der Eintrittsseite als auch an der Austrittsseite verschweißt ist.

6. Schwimmendes Fundament nach einem der vorstehenden Ansprüche, bestehend aus drei vertikalen Elementen und zwei horizontalen Elementen.

7. Schwimmendes Fundament nach einem der vorstehenden Ansprüche, wobei jeder Abschnitt des schwimmenden Fundaments ferner eine Vielzahl von Ringrahmen (54) umfasst, die an einer Innenfläche befestigt sind und sich radial nach innen erstrecken.

8. Schwimmendes Fundament nach einem der vorstehenden Ansprüche, wobei jeder Abschnitt des schwimmenden Fundaments einen kreisförmigen Außenquerschnitt mit einem Durchmesser in einem Bereich zwischen 7,5 m und 15 m und vorzugsweise zwischen 9 m und 12 m aufweist.

9. Schwimmendes Fundament nach einem der vorstehenden Ansprüche, wobei der letzte vertikale Abschnitt so angeordnet ist, dass er unter Wasser endet, und vorzugsweise mit einer Hebeplatte (30) versehen ist.

10. Schwimmendes Fundament nach einem der vorstehenden Ansprüche, wobei das Innere des schwimmenden Fundaments im Wesentlichen hohl ist und eine Vielzahl von getrennten Ballasttanks (31B, C, D, E, H) umfasst.

11. Schwimmendes Fundament nach einem der vorstehenden Ansprüche, wobei das schwimmende Fundament aus Stahl besteht und so konfiguriert ist, dass es eine Windkraftanlage mit einem Gesamtgewicht von mehr als 1000 t trägt.

12. Schwimmende Windkraftanlage mit einem Turm und einem schwimmenden Fundament nach einem der vorstehenden Ansprüche.

13. Verfahren zum Errichten eines schwimmenden Fundaments für eine Offshore-Windkraftanlage, wobei das Verfahren die Schritte umfasst:
a. Bereitstellen eines ersten und eines mittleren ringförmigen Fußes, die jeweils eine Oberseite mit einer Aussparung mit einem ersten Durchmesser aufweisen, wobei der erste und der zweite Fuß einen zweiten Durchmesser aufweisen;
b. Bereitstellen eines ersten horizontalen Abschnitts mit einem ersten Ende und einem mittleren Ende, wobei der erste horizontale Abschnitt rohrförmig ist und einen Durchmesser aufweist, der dem ersten Durchmesser entspricht,
c. Aufsetzen des ersten horizontalen Abschnitts auf den ersten und zweiten ringförmigen Fuß, so dass er mit den jeweiligen Aussparungen fluchtend ist, wobei das erste und das mittlere Ende über die jeweiligen Füße hinausragen,
d. Bereitstellen eines ersten und eines mittleren vertikalen Abschnitts, die rohrförmig sind und den zweiten Durchmesser aufweisen und an ihren jeweiligen Unterseiten mit Aussparungen des ersten Durchmessers versehen sind,
e. Aufsetzen des ersten und des mittleren vertikalen Abschnitts auf den ersten horizontalen Abschnitt, jeweils fluchtend mit dem ersten und dem mittleren ringförmigen Fuß, und Verschweißen aller Elemente miteinander, um erste und untere mittlere, sich gegenseitig durchdringende Rohrverbindungen zu bilden,
f. Bereitstellen weiterer sich gegenseitig durchdringender Rohrverbindungen zu mindestens einem zweiten horizontalen Abschnitt und einem letzten vertikalen Abschnitt, um einen mäanderförmigen Weg zu definieren, der sich von einem proximalen Ende zu einem distalen Ende erstreckt, wobei sich der erste vertikale Abschnitt am proximalen Ende befindet, der mittlere vertikale Abschnitt zwischen einem horizontalen Unterwasserabschnitt und einem horizontalen Überwasserabschnitt angeordnet ist und der letzte vertikale Abschnitt am distalen Ende des schwimmenden Fundaments angeordnet ist.

14. Verfahren nach Anspruch 13, wobei mindestens die Schritte a. bis c. an Land und mindestens Schritt f. bei schwimmendem ersten horizontalen Abschnitt stattfinden.

15. Verfahren nach Anspruch 13 oder Anspruch 14, das ferner das Anbringen einer Hebeplatte an einem unteren Ende des letzten vertikalen Abschnitts und/oder das Vorbereiten des mittleren vertikalen Abschnitts für die Aufnahme eines Windkraftanlagenturms und optional das Verbinden eines Windkraftanlagenturms mit dem mittleren vertikalen Abschnitt umfasst.

## Revendications

1. Fondation flottante (1) pour une éolienne offshore (2) dotée d'une tour (4) définissant une direction verticale, la fondation flottante comprenant au moins une première section verticale (24A), une section verticale finale (24C), et une section verticale intermédiaire (24B) et au moins deux sections horizontales (11), où
les sections verticales et les sections horizontales sont des éléments tubulaires, disposés de façon alternée pour définir une trajectoire sinueuse s'étendant d'une extrémité proximale (26) à une extrémité distale (28) avec la première section verticale située à l'extrémité proximale, la section verticale intermédiaire située entre une section horizontale immergée (14) et une section horizontale émergée (18) et la section verticale finale située à l'extrémité distale de la fondation flottante, les éléments tubulaires étant reliés entre eux par des joints tubulaires interpénétrants et où l'une des sections verticales est conçue pour recevoir la tour.

2. Fondation flottante selon la revendication 1, où la section verticale intermédiaire est conçue pour recevoir la tour.

3. Fondation flottante selon l'une quelconque des revendications précédentes, où les sections horizontales ont un premier diamètre constant et les sections verticales ont toutes un deuxième diamètre constant et le premier diamètre des sections horizontales est de préférence inférieur au deuxième diamètre des sections verticales.

4. Fondation flottante selon l'une quelconque des revendications précédentes, où les sections verticales sont équidistantes et, de façon optionnelle, où les sections verticales forment les nœuds d'un triangle équilatéral dans un plan horizontal.

5. Fondation flottante selon l'une quelconque des revendications précédentes, où pour chaque joint tubulaire interpénétrant une extrémité de la section horizontale traverse complètement la section verticale et est soudée à la fois du côté de l'entrée et du côté de la sortie.

6. Fondation flottante selon l'une quelconque des revendications précédentes, constituée de trois éléments verticaux et deux éléments horizontaux.

7. Fondation flottante selon l'une quelconque des revendications précédentes, où chaque section de la fondation flottante comprend en outre une pluralité de cadres annulaires (54) fixés à une surface intérieure et s'étendant radialement vers l'intérieur.

8. Fondation flottante selon l'une quelconque des revendications précédentes, où chaque section de la fondation flottante présente une section transversale externe circulaire d'un diamètre compris entre 7,5 m et 15 m, et de préférence entre 9 m et 12 m.

9. Fondation flottante selon l'une quelconque des revendications précédentes, où la section verticale finale est conçue pour terminer sous l'eau et est de préférence munie d'une plaque anti-pilonnement (30).

10. Fondation flottante selon l'une quelconque des revendications précédentes, où un intérieur de la fondation flottante est sensiblement creux et comprend une pluralité de réservoirs de ballast séparés (31B, C, D, E, H).

11. Fondation flottante selon l'une quelconque des revendications précédentes, où la fondation flottante est en acier et est configurée pour supporter une éolienne d'un poids total supérieur à 1000 t.

12. Éolienne flottante dotée d'une tour et d'une fondation flottante selon l'une quelconque des revendications précédentes.

13. Procédé de construction d'une fondation flottante pour une éolienne offshore, où le procédé comprend les étapes suivantes :
a. fournir un premier et un deuxième pied annulaire chacun présentant un renfoncement sur sa face supérieure d'un premier diamètre, le premier et le deuxième pied présentant un deuxième diamètre ;
b. fournir une première section horizontale, présentant une première extrémité et une extrémité intermédiaire, la première section horizontale étant tubulaire et présentant un diamètre correspondant au premier diamètre,
c. placer la première section horizontale sur le premier et le deuxième pied annulaire de manière à ce qu'elle soit alignée avec les renfoncements respectifs, la première et la deuxième extrémité dépassant les pieds respectifs,
d. fournir une première section verticale et une deuxième section verticale intermédiaire, tubulaires et dotées d'un deuxième diamètre et présentant des renfoncements du premier diamètre sur leurs faces inférieurs respectives,
e. placer la première section verticale et de la deuxième section verticale intermédiaire sur la première section horizontale, alignées respectivement avec le premier et le deuxième pied annulaire et souder tous les éléments ensemble pour former des premiers joints tubulaires interpénétrants et des joints tubulaires interpénétrants intermédiaires inférieurs,
f. fournir des joints tubulaires interpénétrants supplémentaires pour au moins une deuxième section horizontale et une section verticale finale pour définir une trajectoire sinueuse s'étendant d'une extrémité proximale à une extrémité distale avec la première section verticale située à l'extrémité proximale, la section verticale intermédiaire située entre une section horizontale immergée et une section horizontale émergée et la section verticale finale située à l'extrémité distale de la fondation flottante.

14. Procédé selon la revendication 13, où au moins les étapes a. à c. se déroulent à terre et au moins l'étape f. se déroule avec la première section horizontale en flottaison.

15. Procédé selon la revendication 13 ou 14, comprenant en outre la fourniture d'une plaque anti-pilonnement à une extrémité inférieure de la section verticale finale et/ou la préparation de la section verticale intermédiaire pour la réception d'une tour d'éolienne et la connexion de façon optionnelle d'une tour d'éolienne à la section verticale intermédiaire.
